# EUROPEAN PATENT SPECIFICATION

(11) **EP 3 896 627 B1**
(45) Date of publication and mention of the grant of the patent: **02.04.2025**
(21) Application number: 20763172.2
(22) Date of filing: 19.02.2020
(51) Int. Cl.: A01D 34/00, G06Q 10/06, G06Q 50/02, A01G 7/00

(54) **AUTOMATED WORK SYSTEM**
AUTOMATISIERTES ARBEITSSYSTEM
SYSTÈME DE TRAVAIL AUTOMATISÉ

(30) Priority: 26.02.2019 JP 2019032987
(43) Date of publication of application: 20.10.2021
(73) Proprietor: HONDA MOTOR CO., LTD., Minato-ku Tokyo 107-8556 (JP)
(72) Inventor: MATSUHISA, Tetsuya, Wako-shi, Saitama 351-0193 (JP); DOBASHI, Manabu, Wako-shi, Saitama 351-0193 (JP); HASHIZUME, Takashi, Wako-shi, Saitama 351-0193 (JP); HISADA, Ryota, Tokyo 107-8556 (JP)
(74) Representative: Beder, Jens
(86) International application number: PCT/JP2020/006591
(87) International publication number: WO 2020/175285

(56) References cited:
- EP-A1- 3 324 261
- WO-A1-2018/123629
- WO-A1-2018/123631
- JP-A- 2012 105 557
- JP-A- 2012 235 712
- JP-A- 2018 068 130
- JP-A- 2018 500 655
- US-A1- 2015 296 707
- US-A1- 2016 282 867
- US-A1- 2016 366 813
- US-A1- 2018 215 393

## Description

### TECHNICAL FIELD

The present invention relates to an automated work system that performs automated work in a rental farm.

### BACKGROUND ART

JP 2013 - 260654 A discloses a configuration of a work management system in which operation data of agricultural machines is transmitted to a server and the server specifies the maintenance interval of each agricultural machine on the basis of the operation data.

Wo 2018/123629 discloses a work machine having an autonomous travel function that includes: a cutting section that cuts a work target of the work machine; an image-capturing section that captures an image of the work target cut by the cutting section; and a judging section that judges a state of the cutting section based on the image captured by the image-capturing section. The judging section may judge whether maintenance of or a check on the cutting section is necessary or not based on a result of judgment about the state of the cutting section.

### SUMMARY OF INVENTION

### TECHNICAL PROBLEM

However, in a field rental service (hereinafter, "rental farm") for enjoying vegetable cultivation by renting a field, use of an automated work machine that automatically performs predetermined work creates a need for scheduling of work performed by the automated work machine rather than scheduling of the maintenance interval in which the automated work machine does not perform work.

For example, in confliction between the scheduled work time during which the user arrives at the work area of the rental farm and performs work in the work area and the work time during which the automated work machine performs work, even if the user visits the rental farm, the user may fail to perform the work in a situation where the automated work machine is at work in the work area.

The present invention has been made in view of the above issues, and an object of the present invention is to provide an automated work technique enabling generation of a schedule on the basis of a scheduled work time during which a user arrives at a work area and performs work in the work area or a time slot during which the user is not in the work area.

### SOLUTION TO PROBLEM

An automated work system according to one aspect of the present invention includes a control apparatus capable of controlling an automated work machine that performs work in a work area, the automated work system including:
a generation unit configured to generate a schedule for the work, characterized in that
the generation unit acquires a work starting time at which a user arrives at the work area and paperwork and time which is the end of a scheduled work time where the user stays and performs work in the work area, andgenerates the schedule such that the automated work machine (10) performs the work in the work area at a time slot excluding a scheduled work time which is defined from the work starting time until work end time,
the generation unit (C1) determines whether or not the automated work machine (10) is able to complete the work before arrival of the scheduled work time of the user,
in a case where the automated work machine (10) is not able to complete the work before arrival of the scheduled work time of the user, the generation unit (C1) generates a schedule such that the automated work machine (10) performs the work after end of the scheduled work time of the user,
in a case where the automated work machine (10) is able to complete the work before arrival of the scheduled work time of the user, the generation unit (C1) generates a schedule such that the automated work machine (10) performs the work before the scheduled work time of the user,
in a case where the work area includes a plurality of divided areas, the generation unit (C₁) generates the schedule such that the automated work machine (10) performs the work in another divided area excluding one divided area in which the scheduled work time of the user is set, wherein
the generation unit (C1) determines whether or not the automated work machine (10) is able to complete the work including a plurality of steps before arrival of the scheduled work time, and
in a case where the automated work machine (10) is not able to complete the work, the generation unit (C1) specifies a number of steps which the automated work machine (10) is able to complete before arrival of the scheduled work time and generates the schedule such that the work having the number of steps specified is performed, wherein
the generation unit generates the schedule such that the work including a step different from a step completed among the plurality of steps is performed after end of the scheduled work time.

### ADVANTAGEOUS EFFECTS OF INVENTION

The present invention enables generation of a schedule on the basis of a scheduled work time during which a user arrives at a work area and performs work in the work area or a time slot during which the user is not in the work area.

### BRIEF DESCRIPTION OF DRAWINGS

The accompanying drawings illustrating an embodiment of the present invention constitute a part of the specification, and are used together with the description to describe the present invention.
FIG. 1 schematically illustrates the overview of an automated work system according to an embodiment.
FIG. 2A is a schematic top view of the automated work machine according to the embodiment.
FIG. 2B is a schematic side view of the automated work machine according to the embodiment.
FIG. 3 is a block diagram illustrating the relationship between input and output of an electronic control unit (ECU) that controls the automated work machine according to the embodiment.
FIG. 4 is an illustration schematically describing schedule generation.
FIG. 5 is a flowchart for describing schedule-generation processing.
FIG. 6 is a flowchart for describing the schedule-generation processing in detail.
FIG. 7 is an exemplary table stored in a growth-level database.

### DESCRIPTION OF EMBODIMENTS

Hereinafter, an embodiment of the present invention will be described in detail with reference to the accompanying drawings.

### (Overview of Automated Work System)

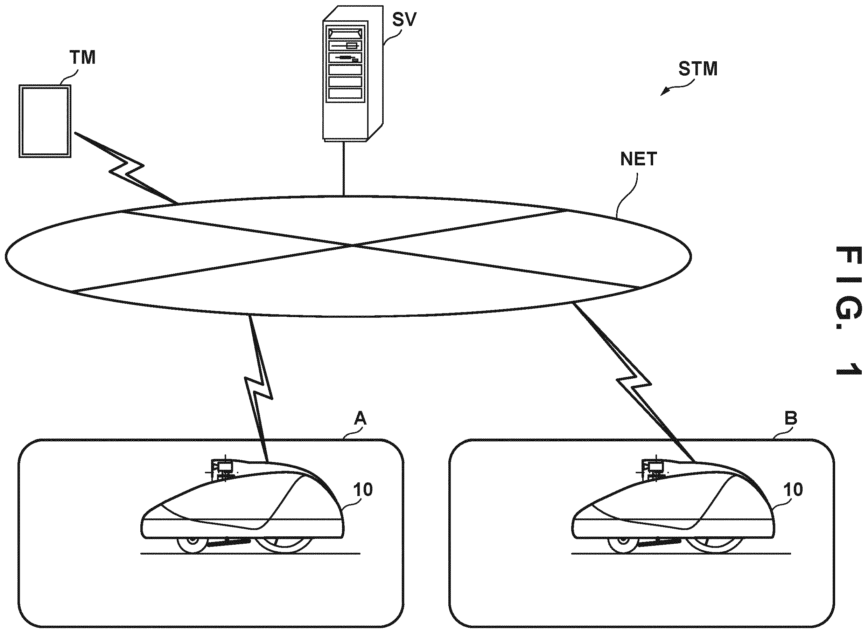

FIG. 1 schematically illustrates the overview of an automated work system according to an embodiment, and an automated work system STM includes an automated work machine 10 that performs work in a work area, a control apparatus (SV, TM) capable of controlling the automated work machine. The control apparatus includes an information processing apparatus SV and a mobile information terminal apparatus TM such as a smartphone that are operable by a user. The information processing apparatus SV and the information terminal apparatus TM are communicable with the automated work machine 10 through a network NET. Note that the central processing unit (CPU) of the automated work machine 10 may serve as the control apparatus (information processing apparatus SV and information terminal apparatus TM).

The work area is, for example, a work area of a rental farm in a rental service, and in FIG. 1, the automated work machine 10 is disposed in a work area A. The automated work machine 10 is also disposed in a work area B different from the work area A. The control apparatus (SV, TM) generates a schedule for performing work in each work area on the basis of an operation input by the user, so that the corresponding automated work machine 10 can be controlled on the basis of the generated schedule.

The automated work machine 10 can function as, for example, a lawn mower, a snow blower, or a cultivator that performs work while autonomously traveling within a work area. However, the examples of the automated work machine are merely exemplified, and thus the present invention is applicable to other types of work machines. In the following description, the embodiment of the present invention will be described with the configuration of a lawn mower as an example.

### (Overview of Automated Work Machine)

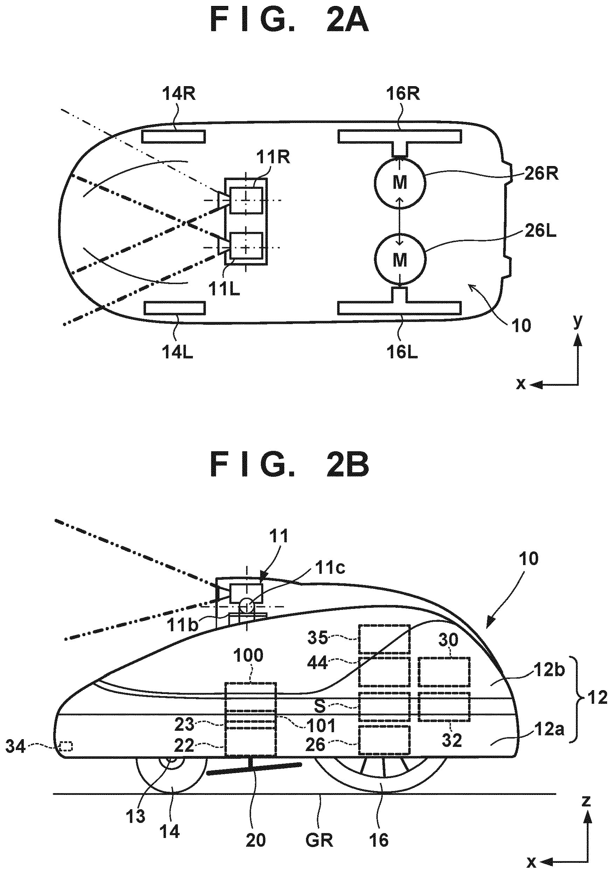

FIG. 2A is a schematic top view of the automated work machine according to the embodiment, and FIG. 2B is a schematic side view of the automated work machine. Hereinafter, a traveling direction (vehicle length direction: x direction), a lateral direction (vehicle width direction: y direction) orthogonal to the traveling direction, and a vertical direction (z direction) orthogonal to the traveling direction and the lateral direction in side view of the automated work machine are defined, respectively, as a front-and-rear direction, a left-and-right direction (horizontal direction), and an up-and-down direction, and the configuration of each part will be described in accordance with to the definition. In FIGS. 2A and 2B, reference sign 10 denotes an automated work machine that performs work while autonomously traveling in a work area.

As illustrated in FIGS. 2A and 2B, the automated work machine 10 includes a camera 11, a vehicle body 12, a stay 13, a front wheel 14, a rear wheel 16, a blade 20, a work motor 22, a motor holding member 23, a blade-height adjustment motor 100, and a translation mechanism 101. The automated work machine 10 also includes a travel motor 26, a group of various sensors S, an electronic control unit (ECU) 44, a charging unit 30, a battery (battery) 32, a charging terminal 34, and a notification unit 35.

The camera 11 that captures the outside of the automated work machine 10 includes a plurality of cameras (left camera 11L, right camera 11R) capable of capturing a situation around the automated work machine 10. Information regarding the distance between an object present ahead of the automated work machine 10 (for example, agricultural product in the work area) and the automated work machine 10 can be calculated and acquired with an image captured by the camera 11 (left camera 11L, right camera 11R). In FIGS. 2A and 2B, the two-dot chain lines extending ahead of the camera 11 (left camera 11L, right camera 11R) indicate a predetermined viewing angle of the camera 11. The ECU 44 can acquire information regarding the outside of the automated work machine 10 from the camera 11.

The camera 11 (left camera 11L, right camera 11R) is held by a pan-angle adjustment mechanism 11b that adjusts the angle in the horizontal direction and a tilt-angle adjustment mechanism 11c that adjusts the angle in the up-and-down direction. The ECU 44 controls at least either the pan-angle adjustment mechanism 11b or the tilt-angle adjustment mechanism 11c, so that the angle of the camera 11 can be controlled.

The vehicle body 12 of the automated work machine 10 includes a chassis 12a and a frame 12b attached to the chassis 12a. The front wheel 14 includes two left and right wheels (left front wheel 14L, right front wheel 14R) each having a smaller diameter and secured to the front side of the chassis 12a through the stay 13 in the front-and-rear direction. The rear wheel 16 includes two left and right wheels (left rear wheel 16L, right rear wheel 16R) each having a larger diameter and attached to the rear side of the chassis 12a.

The blade 20 is a rotary blade for mowing work and is attached near the central position of the chassis 12a. The work motor 22 is an electric motor disposed above the blade 20. The blade 20 is connected to the work motor 22 and is rotationally driven by the work motor 22. The motor holding member 23 holds the work motor 22. The motor holding member 23 is restricted in rotation to the chassis 12a, and is allowed to move in the up-and-down direction by, for example, a combination of a guide rail and a slider that is guided by the guide rail and is movable up and down.

The blade-height adjustment motor 100 is a motor for adjusting the height in the up-and-down direction of the blade 20 to the ground surface GR. The translation mechanism 101 is connected to the blade-height adjustment motor 100, and is a mechanism for converting rotation of the blade-height adjustment motor 100 into translation in the up-and-down direction. The translation mechanism 101 is also connected to the motor holding member 23 that holds the work motor 22.

The rotation of the blade-height adjustment motor 100 is converted into the translation (movement in the up-and-down direction) by the translation mechanism 101, and the translation is transmitted to the motor holding member 23. Due to the translation (movement in the up-and-down direction) of the motor holding member 23, the work motor 22 held by the motor holding member 23 also is translated (moves in the up-and-down direction). Due to the movement in the up-and-down direction of the work motor 22, the height of the blade 20 to the ground surface GR can be adjusted.

The travel motor 26 includes two electric motors (prime movers) (left travel motor 26L, right travel motor 26R) attached to the chassis 12a of the automated work machine 10. The two electric motors are connected one-to-one to the left and right rear wheels 16. Independent rotation of the left and right wheels forward (rotation in the forward direction) or rearward (rotation in the rearward direction) with the front wheel 14 as a driven wheel and the rear wheel 16 as a drive wheel allows the automated work machine 10 to move in various directions.

The charging terminal 34 is a charging terminal provided at the front-end position in the front-and-rear direction of the frame 12b, and is connected to the corresponding charging terminal of a charging station to receive power supplied from the charging station. The charging terminal 34 is connected to the charging unit 30 through wiring, and the charging unit 30 is connected to the battery (battery) 32. In addition, the work motor 22, the travel motor 26, and the blade-height adjustment motor 100 are connected to the battery 32, and are supplied with power from the battery 32.

The ECU 44 is an electronic control unit including a microcomputer provided on a circuit board, and controls the operation of the automated work machine 10. Details of the ECU 44 will be described below. In a case like occurrence of abnormality in the automated work machine 10, the notification unit 35 issues a notification of the fact. For example, the notification can be issued with voice or display. Alternatively, the occurrence of abnormality can be output to an external device wirelessly connected to the automated work machine 10. The user can know the occurrence of abnormality through the external device.

### (Control Block Diagram)

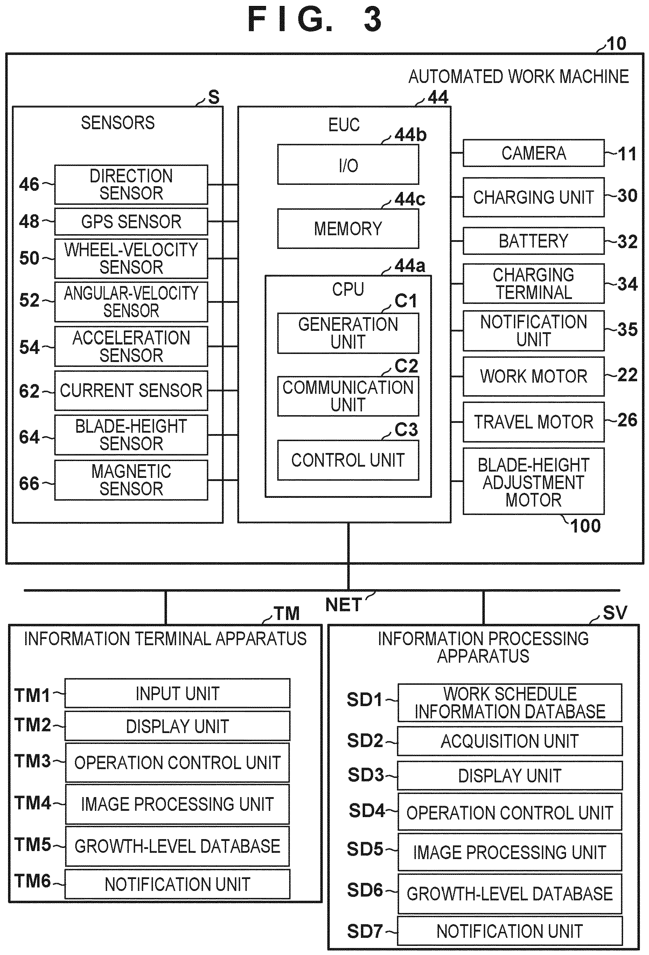

FIG. 3 is a block diagram illustrating the relationship between input and output of the electronic control unit (ECU) that controls the automated work machine 10. As illustrated in FIG. 3, the ECU 44 includes a CPU 44a, an I/O 44b, and a memory 44c. The memory 44c functions as a storage unit, and includes a read only memory (ROM), an electrically erasable programmable read only memory (EEPROM), a random access memory (RAM), and the like.

The memory 44c stores information regarding a work timetable (schedule) and a work area of the automated work machine 10, various programs for controlling the operation of the automated work machine 10, and an area map indicating the shape of the work area. The automated work machine 10 is capable of performing predetermined work while autonomously traveling within the work area on the basis of the area map of the work area. In order to operate each processing unit for achieving the present invention, the ECU 44 reads and executes a program stored in the memory 44c.

The ECU 44 is connected to the group of various sensors S. The sensor group S includes a direction sensor 46, a global positioning system (GPS) sensor 48, a wheel-velocity sensor 50, an angular-velocity sensor 52, an acceleration sensor 54, a current sensor 62, a blade-height sensor 64, a magnetic sensor 66, and the like.

The GPS sensor 48 and the direction sensor 46 are sensors for acquiring information regarding the position and orientation of the automated work machine 10. The direction sensor 46 detects the direction in accordance with geomagnetism. The GPS sensor 48 receives radio waves from a GPS satellite and detects information indicating the current position (latitude, longitude) of the automated work machine 10.

The wheel-velocity sensor 50, the angular-velocity sensor 52, and the acceleration sensor 54 are sensors for acquiring information regarding the movement state of the automated work machine 10. The wheel-velocity sensor 50 detects the wheel velocity of the left and right rear wheels 16. The angular-velocity sensor 52 detects an angular velocity around the axis in the up-and-down direction (z axis in the vertical direction) of the position of the center of gravity of the automated work machine 10. The acceleration sensor 54 detects accelerations in the orthogonally triaxial directions of x, y, and z axes acting on the automated work machine 10.

The current sensor 62 detects the current consumption (amount of power consumption) of the battery 32. The detection result of the current consumption (amount of power consumption) is stored in the memory 44c of the ECU 44. In a case where a predetermined amount of power is consumed and the amount of power stored in the battery 32 becomes not more than a threshold, the ECU 44 controls such that the automated work machine 10 returns to the charging station for charging.

The blade-height sensor 64 detects the height of the blade 20 to the ground surface GR. The detection result of the blade-height sensor 64 is output to the ECU 44. On the basis of the control of the ECU 44, the blade-height adjustment motor 100 is driven and the blade 20 moves up and down in the up-and-down direction to adjust the height from the ground surface GR.

The magnetic sensor 66 includes a left magnetic sensor 66L and a right magnetic sensor 66R that are disposed at symmetrical positions in the left-and-right direction of the automated work machine 10 and output signals indicating the strength of magnetic field (intensity of magnetic field) to the ECU 44.

Outputs of the group of various sensors S are input to the ECU 44 through the I/O 44b. On the basis of the outputs of the group of various sensors S, the ECU 44 supplies power from the battery 32 to the travel motor 26, the work motor 22, and the height adjustment motor 100. The ECU 44 outputs a control value through the I/O 44b and controls the travel motor 26, so that traveling of the automated work machine 10 is controlled. The ECU 44 also outputs a control value through the I/O 44b and controls the height adjustment motor 100, so that the height of the blade 20 is adjusted. The ECU 44 further outputs a control value through the I/O 44b and controls the work motor 22, so that rotation of the blade 20 is controlled. Here, the I/O 44b can function as a communication interface (communication unit), and is wirelessly communicable with the control apparatus (information processing apparatus SV, information terminal apparatus TM) through the network NET.

The information processing apparatus SV (server) stores a work-schedule-information database SD that stores scheduled-work information of the user. The work-schedule-information database SD is a database stored in the server 350, and stores a scheduled work time during which the user arrives at a work area and performs work in the work area (for example, the user is scheduled to arrive at ∘ o'clock AM on day D, month M, year Y and is scheduled to work in the work area for Δ hours) or a time slot during which the user is not in the work area.

The I/O 44b (communication unit) of the automated work machine 10 can store (download) the information in the work-schedule-information database SD from the information processing apparatus SV into the memory 44c. The CPU 44a is capable of executing various types of processing with reference to the scheduled work time stored in the memory 44c.

An acquisition unit SD2 included in the information processing apparatus SV acquires, through the network NET, the scheduled work time during which the user arrives at the work area and performs work in the work area or the time slot during which the user is not in the work area. For example, the user can input information regarding the scheduled work time from an input unit UI included in the information terminal apparatus TM, and the acquisition unit SD2 acquires the information regarding the scheduled work time of the user and the like through communication with the information terminal apparatus TM and registers the information in the scheduled-work-time information database SD.

The user may register the information regarding the scheduled work time and the like in advance from the input unit UI of the information terminal apparatus TM to the work-schedule-information database SD1 of the information processing apparatus SV, or may directly transmit the information regarding the scheduled work time and the like to the automated work machine 10.

Note that the I/O 44b (communication unit) of the automated work machine 10 can also acquire predetermined data with reference to the database (work-schedule-information database SD) on the information processing apparatus SV through wireless communication with the information processing apparatus SV, without downloading the work-schedule-information database SD from the information processing apparatus SV (server).

The ECU 44 reads and executes various programs stored in the memory 44c, so that the CPU 44a functions as a generation unit C1, a communication unit C2, and a control unit C3 for achieving the present invention.

### (Schedule Generation)

The generation unit C1 generates a schedule for the automated work machine 10 in a work area. The generation unit C1 generates the schedule on the basis of a scheduled work time during which the user arrives at the work area and performs work in the work area or a time slot during which the user is not in the work area.

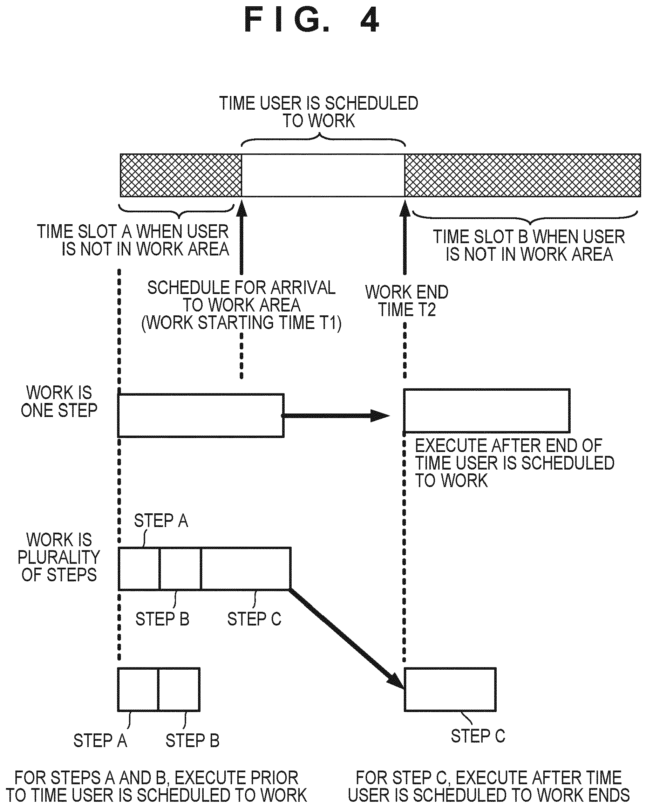

FIG. 4 is an illustration schematically describing schedule generation, and illustrates, with the time at which the user arrives at a work area defined as the starting point (work starting time T1), that the user stays and performs work in the work area during the scheduled work time until the work end time T2. A time slot excluding the scheduled work time in one day (24 hours) is defined as a time slot during which the user is not in the work area (absent time slot). In order to avoid confliction between the scheduled work time during which the user arrives at the work area of a rental farm and performs work in the work area and a work time during which the automated work machine performs work, the generation unit C1 generates a schedule such that the work is performed in the time slot during which the user is not in the work area (in the absent time slot).

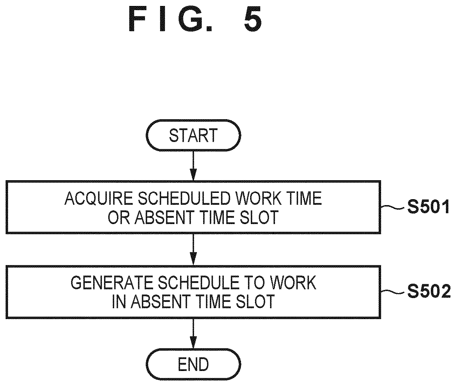

FIG. 5 is a flowchart for describing schedule-generation processing by the generation unit C1. First, in step S501, the generation unit C1 acquires a scheduled work time or absent time slot of the user from the work-schedule-information database SD1 through communication with the information processing apparatus SV. Alternatively, the generation unit C1 acquires a scheduled work time or absent time slot of the user through communication with the information terminal apparatus TM.

In step S502, the generation unit C1 generates a schedule on the basis of the scheduled work time during which the user arrives at a work area and performs work in the work area or the absent time slot during which the user is not in the work area. The generation unit C1 specifies the absent time slot from the information acquired in S501, and generates the schedule such that work is performed in a time slot that does not overlap with the scheduled work time. That is, the generation unit C1 generates the schedule such that work is performed in a time slot during which the user is not in the work area (in the absent time slot).

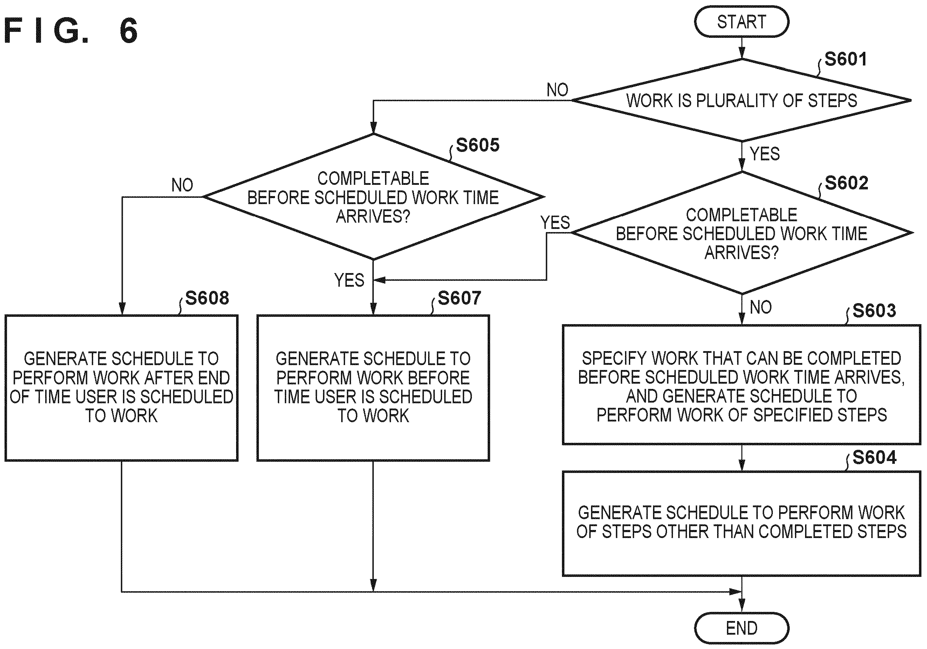

FIG. 6 is a flowchart for describing the schedule-generation processing in detail.

In step S601, the generation unit C1 determines whether work to be performed includes a plurality of steps, and in a case where the work to be executed includes a single step (S601-No), the generation unit C1 advances the processing to step S605.

Otherwise, in determination in step S601, in a case where the work to be executed includes a plurality of steps (S601-Yes), the generation unit C1 advances the processing to step S602.

In step S602, the generation unit C1 determines whether or not the work including a plurality of steps is completable before arrival of the scheduled work time of the user. In a case where the work is not completable (S602-No), in step S603, the generation unit C1 specifies the number of steps completable before arrival of the scheduled work time and generates a schedule such that the work having the number of specified steps is performed.

Then, in step S604, the generation unit generates a schedule such that work including a step different from a step completed among the plurality of steps is performed after end of the scheduled work time.

For example, as illustrated in FIG. 4, in a case where the work to be executed includes a plurality of steps (A, B, and C), when the generation unit C1 determines that the steps A and B are completable before arrival of the scheduled work time and the step C is not completable before arrival of the scheduled work time, the generation unit C1 generates a schedule such that the steps A and B are performed before the scheduled work time of the user and generates a schedule such that the step C is performed after end of the scheduled work time of the user. That is, in step S603, the generation unit C1 generates a schedule such that the work having the number of specified steps (steps A and B) is performed in a time slot A (FIG. 4) during which the user is not in the work area, and in step S604, the generation unit C1 generates a schedule such that the work including the step (step C) different from the steps completed among the plurality of steps is performed in a time slot B (FIG. 4) during which the user is not in the work area.

Meanwhile, in a case where the work to be executed includes a single step, in step S605, when the generation unit C1 determines whether or not the work is completable before arrival of the scheduled work time of the user and the work is not completable (S605-No), in step S608, the generation unit C1 generates a schedule such that the work is performed after end of the scheduled work time of the user (in the time slot B during which the user is not in the work area). Otherwise, in a case where the work is completable before arrival of the scheduled work time of the user (S605-Yes), in step S607, the generation unit C1 generates a schedule such that the work is performed before the scheduled work time of the user (in the time slot A during which the user is not in the work area).

Furthermore, in response to setting of attribute information indicating a work attribute (for example, maintenance of a work machine, repair work thereof, pest control, seeding, or harvest work) of the user in the work area, the generation unit C1 can also acquire the scheduled work time corresponding to the attribute information and can generate a schedule.

Moreover, in a case where the work area includes a plurality of divided areas, the generation unit C1 can also generate, on the basis of a work schedule of the user who performs the work in one divided area among the plurality of divided areas, a schedule such that the work is performed in another divided area excluding the one divided area. For example, in a case where there is a plurality of work areas A (for example, areas A1, A2, and A3) and the work schedule of the user is for the area A1, a schedule can be generated such that the automated work machine 10 performs the work in the remaining area A2 or A3.

### (Display of Captured Image by Camera)

The communication unit C2 of the automated work machine 10 distributes an image captured by the image capturing unit (camera 11) that captures images of a work area, to the control apparatus (information processing apparatus SV and information processing terminal TM). In addition, the control apparatus (information processing apparatus SV and information processing terminal TM) includes a display unit (SD3, TM2) that can display the image distributed from the automated work machine 10, as an image browsable online by the user. Moreover, the work area is provided with an image capturing device (fixed camera) that captures an image of the work area and distributes the captured image to the control apparatus, and the display unit (SD3, TM2) included in the control apparatus (information processing apparatus SV and information processing terminal TM) can also display the image distributed from the image capturing device (fixed camera), as an image browsable online by the user.

### (Camera Control in Automated Work Machine)

The control apparatus (information processing apparatus SV and information processing terminal TM) includes an operation control unit (SD4, TM3) that generates control information on the basis of an instruction of the user, and the control unit C3 of the automated work machine 10 controls the automated work machine 10 and the image capturing unit (the camera 11) on the basis of the control information generated by the control apparatus. In response to input of the control information for capturing a specific part (for example, a specific part of an agricultural product) in a work area, the control unit C3 of the automated work machine 10 controls movement of the automated work machine 10 on the basis of the control information and controls the capturing angle and the capturing direction of the image capturing unit (camera 11) in accordance with the part.

### (Image Processing on Captured Image)

The control apparatus (information processing apparatus SV and information processing terminal TM) includes an image processing unit (SD5, TM4) that performs predetermined image processing on an image captured by the image capturing unit (camera 11) of the automated work machine 10 or the image capturing device (fixed camera) provided in the work area.

The image processing unit (SD5, TM4) acquires, from the image including an agricultural product captured in a cultivation process in the work area, at least any one piece of feature information from color information indicating the height, the amount of thick growth, and the level of growth of the agricultural product, and estimates the harvest timing of the agricultural product on the basis of the feature information. For example, the image processing unit (SD5, TM4) holds, as a reference model, color information that is obtained by modeling the reference growing level and indicates the height, the amount of thick growth, and the level of growth change in accordance with the elapse of time, for the type (item) of an agricultural product in cultivation. The image processing unit (SD5, TM4) can estimate the harvest timing of the agricultural product by comparison between information regarding the reference model and the feature information acquired from the captured image.

The control apparatus (information processing apparatus SV and information processing terminal TM) further includes a growth-level database (SD6, TM5) as a storage unit that stores a table in which the feature information acquired from the captured image (color information acquired from the image) is in association with the level of growth of the agricultural product. The image processing unit (SD5, TM4) can also estimate the harvest timing of the agricultural product with reference to the table in the growth-level database (SD6, TM5). Here, the feature information acquired from the captured image (color information acquired from the image) includes information regarding hue, saturation, and brightness.

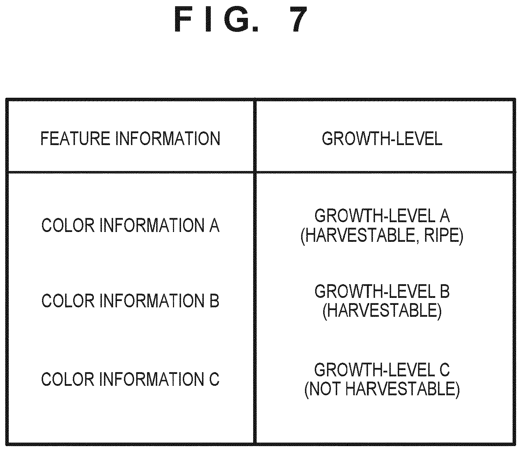

FIG. 7 is an exemplary table stored in the growth-level database (SD6, TM5). In a case where the color information acquired from the image is color information A, the corresponding grade in level of growth is growth-level A indicating that the agricultural product is harvestable and ripe. In addition, in a case where the color information acquired from the image is color information B, the corresponding grade in level of growth is growth-level B indicating that the agricultural product is harvestable. Moreover, in a case where the color information acquired from the image is color information C, the corresponding grade in level of growth is growth-level C indicating that the crop is not harvestable.

The control apparatus (information processing apparatus SV and information processing terminal TM) includes a notification unit (SD7, TM6) that notifies the user of the harvest timing. In a case where the color information acquired from the image is the color information A or the color information B, the notification unit (SD7, TM6) displays, on the display unit (SD3, TM2), that the agricultural product in cultivation is harvestable, and notifies the user of the fact. The generation unit C1 can generate a schedule such that a scheduled time at which the user visits the work area does not overlap the harvest timing.

### REFERENCE SIGNS LIST

- STM: automated work system
- SV: information processing apparatus
- TM: information terminal apparatus
- 10: automated work machine
- 11: camera (11L: left camera, 11R: right camera)
- 11b: pan-angle adjustment mechanism
- 11c: tilt-angle adjustment mechanism
- C1: generation unit
- C2: communication unit
- C3: control unit
- SD1: work-schedule-information database

## Claims

1. An automated work system including a control apparatus (SV, TM) capable of controlling an automated work machine (10) that performs work in a work area, the automated work system comprising:
a generation unit (C1) configured to generate a schedule for the work, **characterized in that**
the generation unit (C1) acquires a work starting time at which a user arrives at the work area and a work end time which is the end of a scheduled work time where the user stays and performs work in the work area, and generates the schedule such that the automated work machine (10) performs the work in the work area at a time slot excluding a scheduled work time which is defined from the work starting time until work end time,
the generation unit (C1) determines whether or not the automated work machine (10) is able to complete the work before arrival of the scheduled work time of the user,
in a case where the automated work machine (10) is not able to complete the work before arrival of the scheduled work time of the user, the generation unit (C1) generates a schedule such that the automated work machine (10) performs the work after end of the scheduled work time of the user,
in a case where the automated work machine (10) is able to complete the work before arrival of the scheduled work time of the user, the generation unit (C1) generates a schedule such that the automated work machine (10) performs the work before the scheduled work time of the user,
in a case where the work area includes a plurality of divided areas, the generation unit (C₁) generates the schedule such that the automated work machine (10) performs the work in another divided area excluding one divided area in which the scheduled work time of the user is set, wherein
the generation unit (C1) determines whether or not the automated work machine (10) is able to complete the work including a plurality of steps before arrival of the scheduled work time, and
in a case where the automated work machine (10) is not able to complete the work, the generation unit (C1) specifies a number of steps which the automated work machine (10) is able to complete before arrival of the scheduled work time and generates the schedule such that the work having the number of steps specified is performed, wherein
the generation unit generates the schedule such that the work including a step different from a step completed among the plurality of steps is performed after end of the scheduled work time.

2. The automated work system according to claim 1, **characterized in that**
the automated work machine (10) includes:
an image capturing unit (11) configured to capture an image of the work area; and
a communication unit (44b) configured to distribute the image captured by the image capturing unit (11) to the control apparatus (SV, TM), and
the control apparatus (SV, TM) further includes:
a display unit (SD3, TM2) configured to display the image distributed, as an image browsable online by the user.

3. The automated work system according to claim 2, **characterized in that** the work area is provided with an image capturing device that captures an image of the work area and distributes the image captured to the control apparatus (SV, TM).

4. The automated work system according to claim 3, **characterized in that**
the control apparatus (SV, TM) further includes:
an operation control unit (SD4, TM3) configured to generate control information, based on an instruction of the user, and
the automated work machine (10) further includes:
a control unit (C3) configured to control the automated work machine (10) and the image capturing unit (11), based on the control information.

5. The automated work system according to claim 4, **characterized in that**
in response to input of the control information for capturing a specific part in the work area, the control unit (C3) of the automated work machine (10)
controls movement of the automated work machine (10), based on the control information and controls a capturing angle and a capturing direction of the image capturing unit (11) in accordance with the part.

6. The automated work system according to any one of claims 2 to 5, **characterized in that** the control apparatus (SV, TM) further includes:
an image processing unit (ST5, TM4) configured to perform predetermined image processing on the image, and
the image processing unit (ST 5, TM 4)
acquires, from the image including an agricultural product captured in a cultivation process in the work area, at least any one piece of feature information from color information indicating a height, an amount of thick growth, and a level of growth of the agricultural product, and estimates a harvest timing of the agricultural product, based on the feature information.

7. The automated work system according to claim 6, **characterized in that**
the control apparatus (SV, TM) further includes:
a storage unit (SD 6, TM 5) configured to store a table in which the color information acquired from the image is in association with the level of growth of the agricultural product, and
the image processing unit (SD 5, TM 4) estimates the harvest timing of the agricultural product with reference to the table.

8. The automated work system according to claim 6 or 7, **characterized in that**
the control apparatus (SV, TM) further includes:
a notification unit (SD 7, TM 6) configured to notify the user of the harvest timing, and
**in that** the generation unit (C1) generates the schedule such that a scheduled time at which the user visits the work area does not overlap the harvest timing.

9. The automated work system according to any one of claims 1 to 8, **characterized in that** in response to setting of attribute information indicating a work attribute of the user in the work area, the generation unit (C1) acquires the scheduled work time corresponding to the attribute information and generates the schedule.

## Patentansprüche

1. Ein automatisiertes Arbeitssystem mit einer Steuervorrichtung (SV, TM), die in der Lage ist, eine automatisierte, in einem Arbeitsbereich Arbeiten ausführende Arbeitsmaschine (10) zu steuern, wobei das automatisierte Arbeitssystem aufweist:
eine Erstellungseinheit (C1), die ausgebildet ist, um einen Zeitplan für die Arbeit zu erstellen,
**dadurch gekennzeichnet, dass**
die Erstellungseinheit (C1) eine Arbeitsstartzeit, zu der ein Benutzer in dem Arbeitsbereich erscheint, und eine Arbeitsendzeit, zu der eine geplante Arbeitszeit, in der der Benutzer bleibt und Arbeit in dem Arbeitsbereich ausführt, zu Ende ist, erfasst, und den Zeitplan so erstellt, dass die automatisierte Arbeitsmaschine (10) die Arbeit in dem Arbeitsbereich in einem Zeitfenster ausführt, mit Ausnahme einer geplanten, von der Arbeitsstartzeit bis zur Arbeitsendzeit definierten Arbeitszeit,
die Erstellungseinheit (C1) bestimmt, ob die automatisierte Arbeitsmaschine (10) in der Lage ist, die Arbeit vor dem Erreichen der geplanten Arbeitszeit des Benutzers zu beenden oder nicht,
im Falle, dass die automatisierte Arbeitsmaschine (10) nicht in der Lage ist, die Arbeit vor Erreichen der geplanten Arbeitszeit des Benutzers abzuschließen, die Erstellungseinheit (C1) einen Zeitplan so erstellt, dass die automatisierte Arbeitsmaschine (10) die Arbeit nach Ende der geplanten Arbeitszeit des Benutzers ausführt,
im Falle, dass die automatisierte Arbeitsmaschine (10) in der Lage ist, die Arbeit vor Erreichen der geplanten Arbeitszeit des Benutzers abzuschließen, die Erstellungseinheit (C1) einen Zeitplan so erstellt, dass die automatisierte Arbeitsmaschine (10) die Arbeit vor der geplanten Arbeitszeit des Benutzers ausführt,
im Falle, dass der Arbeitsbereich eine Mehrzahl an unterteilten Bereichen umfasst, die Erstellungseinheit (C1) den Zeitplan so erstellt, dass die automatisierte Arbeitsmaschine (10) die Arbeit in einem anderen unterteilten Bereich ausführt, mit Ausnahme eines unterteilten Bereichs, in dem die geplante Arbeitszeit des Benutzers festgelegt ist, wobei
die Erstellungseinheit (C1) bestimmt, ob die automatisierte Arbeitsmaschine (10) in der Lage ist, die eine Mehrzahl an Schritten umfassende Arbeit vor dem Erreichen der geplanten Arbeitszeit abzuschließen oder nicht, und
im Falle, dass die automatisierte Arbeitsmaschine (10) nicht in der Lage ist, die Arbeit abzuschließen, die Erstellungseinheit (C1) eine Anzahl von Schritten spezifiziert, die von der automatisierten Arbeitsmaschine (10) vor dem Erreichen der geplanten Arbeitszeit abgeschlossen werden können, und den Zeitplan so erstellt, dass die Arbeit mit der spezifizierten Anzahl von Schritten ausgeführt wird, wobei
die Erstellungseinheit den Zeitplan so erstellt, dass die Arbeit, die einen sich von einem abgeschlossenen Schritt aus der Mehrzahl der Schritte unterscheidenden Schritt enthält, nach dem Ende der geplanten Arbeitszeit ausgeführt wird.

2. Das automatisierte Arbeitssystem nach Anspruch 1, **dadurch gekennzeichnet, dass** die automatisierte Arbeitsmaschine (10) aufweist:
eine Bildaufnahmeeinheit (11), die so ausgebildet ist, dass sie ein Bild des Arbeitsbereichs aufnimmt; und
eine Kommunikationseinheit (44b), die so ausgebildet ist, dass sie das von der Bildaufnahmeeinheit (11) aufgenommene Bild an die Steuervorrichtung (SV, TM) weiterleitet, und
die Steuervorrichtung (SV, TM) ferner aufweist:
eine Anzeigeeinheit (SD3, TM2), die so ausgebildet ist, dass sie das weitergeleitete Bild als ein vom Benutzer online abrufbares Bild anzeigt.

3. Das automatisierte Arbeitssystem nach Anspruch 2, **dadurch gekennzeichnet, dass** der Arbeitsbereich mit einer Bildaufnahmevorrichtung versehen ist, die ein Bild des Arbeitsbereichs aufnimmt und das aufgenommene Bild an das Steuergerät (SV, TM) weiterleitet.

4. Das automatisierte Arbeitssystem nach Anspruch 3, **dadurch gekennzeichnet, dass** die Steuervorrichtung (SV, TM) ferner aufweist:
eine Betriebssteuereinheit (SD4, TM3), die so ausgebildet ist, dass sie auf der Grundlage einer Anweisung des Benutzers Steuerinformation generiert, und
die automatisierte Arbeitsmaschine (10) ferner aufweist:
eine Steuereinheit (C3), die so ausgebildet ist, dass sie die automatisierte Arbeitsmaschine (10) und die Bildaufnahmeeinheit (11) auf Grundlage der Steuerinformation steuert.

5. Das automatisierte Arbeitssystem nach Anspruch **4, dadurch gekennzeichnet, dass**
die Steuereinheit (C3) der automatisierten Arbeitsmaschine (10), als Reaktion auf eine Eingabe der Steuerinformation zum Aufnehmen eines bestimmten Teils in dem Arbeitsbereich, die Bewegung der automatisierten Arbeitsmaschine (10) auf der Grundlage der Steuerinformation steuert und einen Aufnahmewinkel und eine Aufnahmerichtung der Bildaufnahmeeinheit (11) entsprechend diesem Teil steuert.

6. Das automatisierte Arbeitssystem nach einem der Ansprüche 2 bis 5, **dadurch gekennzeichnet, dass** die Steuervorrichtung (SV, TM) ferner aufweist:
eine Bildverarbeitungseinheit (ST5, TM4), die so ausgebildet ist, dass sie eine vorbestimmte Bildverarbeitung an dem Bild durchführt, und
die Bildverarbeitungseinheit (ST5, TM4) aus dem ein landwirtschaftliches Erzeugnis enthaltenden, während eines Kultivierungsprozesses in dem Arbeitsbereich aufgenommen Bildes zumindest eine beliebige Merkmalsinformation aus eine Höhe anzeigender Farbinformation, eines Maßes an dichten Wuchses und einer Wachstumsphase des landwirtschaftlichen Erzeugnisses anzeigt, erfasst und auf der Grundlage der Merkmalsinformation einen Erntezeitpunkt des landwirtschaftlichen Erzeugnisses schätzt.

7. Das automatisierte Arbeitssystem nach Anspruch 6, **dadurch gekennzeichnet, dass**
die Steuervorrichtung (SV, TM) ferner aufweist:
eine Speichereinheit (SD6, TM5), die so ausgebildet ist, dass sie eine Tabelle speichert, in der die aus dem Bild gewonnene Farbinformation der Wachstumsphase des landwirtschaftlichen Erzeugnisses zugeordnet ist, und
die Bildverarbeitungseinheit (ST5, TM4) den Erntezeitpunkt des landwirtschaftlichen Erzeugnisses unter Bezugnahme auf die Tabelle schätzt.

8. Das automatisierte Arbeitssystem nach Anspruch 6 oder 7, **dadurch gekennzeichnet, dass**
die Steuervorrichtung (SV, TM) ferner aufweist:
eine Benachrichtigungseinheit (SD7, TM6), die so ausgebildet ist, dass sie den Benutzer über den Erntezeitpunkt benachrichtigt, und
dadurch, dass die Erstellungseinheit (C1) den Zeitplan so erstellt, dass sich eine geplante Zeit, zu der der Benutzer in dem Arbeitsbereich anwesend ist, mit dem Erntezeitpunkt nicht überschneidet.

9. Das automatisierte Arbeitssystem nach einem der Ansprüche 1 bis 8, **dadurch gekennzeichnet, dass**
die Erstellungseinheit (C1), als Reaktion auf das Einstellen von ein Arbeitsattribut des Benutzers im Arbeitsbereich angebenden Attributinformationen, die geplante Arbeitszeit entsprechend den Attributinformationen erfasst und den Zeitplan erstellt.

## Revendications

1. Système de travail automatisé comportant un appareil de commande (SV, TM) capable de commander une machine de travail automatisée (10) qui réalise un travail dans une zone de travail, le système de travail automatisé comprenant :
une unité de génération (C1) configurée pour générer un planning pour le travail, **caractérisé en ce que**
l'unité de génération (C1) acquiert un temps de début de travail auquel un utilisateur arrive dans la zone de travail et un temps de fin de travail qui est la fin d'un temps de travail planifié où l'utilisateur reste et réalise un travail dans la zone de travail, et génère le planning de telle sorte que la machine de travail automatisée (10) réalise le travail dans la zone de travail à un créneau temporel excluant un temps de travail planifié qui est défini à partir du temps de début de travail jusqu'à un temps de fin de travail,
l'unité de génération (C1) détermine si la machine de travail automatisée (10) est capable ou non d'achever le travail avant que ne survienne le temps de travail planifié de l'utilisateur,
dans un cas où la machine de travail automatisée (10) n'est pas capable d'achever le travail avant que ne survienne le temps de travail planifié de l'utilisateur, l'unité de génération (C1) génère un planning de telle sorte que la machine de travail automatisée (10) réalise le travail après la fin du temps de travail planifié de l'utilisateur,
dans un cas où la machine de travail automatisée (10) est capable d'achever le travail avant que ne survienne le temps de travail planifié de l'utilisateur, l'unité de génération (C1) génère un planning de telle sorte que la machine de travail automatisée (10) réalise le travail avant le temps de travail planifié de l'utilisateur,
dans un cas où la zone de travail comporte une pluralité de zones divisées, l'unité de génération (C1) génère le planning de telle sorte que la machine de travail automatisée (10) réalise le travail dans une autre zone divisée à l'exclusion d'une zone divisée dans laquelle le temps de travail planifié de l'utilisateur est établi, dans lequel
l'unité de génération (C1) détermine si la machine de travail automatisée (10) est capable ou non d'achever le travail comportant une pluralité d'étapes avant que ne survienne le temps de travail planifié, et
dans un cas où la machine de travail automatisée (10) n'est pas capable d'achever le travail, l'unité de génération (C1) spécifie un nombre d'étapes que la machine de travail automatisée (10) est capable d'achever avant que ne survienne le temps de travail planifié et génère le planning de telle sorte que le travail ayant le nombre d'étapes spécifié est réalisé, dans lequel
l'unité de génération génère le planning de telle sorte que le travail comportant une étape différente d'une étape achevée parmi la pluralité d'étapes est réalisé après la fin du temps de travail planifié.

2. Système de travail automatisé selon la revendication 1, **caractérisé en ce que**
la machine de travail automatisée (10) comporte :
une unité de capture d'image (11) configurée pour capturer une image de la zone de travail ; et
une unité de communication (44b) configurée pour distribuer l'image capturée par l'unité de capture d'image (11) à l'appareil de commande (SV, TM), et
l'appareil de commande (SV, TM) comporte en outre :
une unité d'affichage (SD3, TM2) configurée pour afficher l'image distribuée, sous la forme d'une image consultable en ligne par l'utilisateur.

3. Système de travail automatisé selon la revendication 2, **caractérisé en ce que** la zone de travail est dotée d'un dispositif de capture d'image qui capture une image de la zone de travail et distribue l'image capturée à l'appareil de commande (SV, TM).

4. Système de travail automatisé selon la revendication 3, **caractérisé en ce que**
l'appareil de commande (SV, TM) comporte en outre :
une unité de commande de fonctionnement (SD4, TM3) configurée pour générer des informations de commande, sur la base d'une instruction de l'utilisateur, et
la machine de travail automatisée (10) comporte en outre :
une unité de commande (C3) configurée pour commander la machine de travail automatisée (10) et l'unité de capture d'image (11), sur la base des informations de commande.

5. Système de travail automatisé selon la revendication 4, **caractérisé en ce que**
en réponse à l'entrée des informations de commande pour capturer une partie spécifique dans la zone de travail, l'unité de commande (C3) de la machine de travail automatisée (10)
commande le mouvement de la machine de travail automatisée (10), sur la base des informations de commande, et commande un angle de capture et une direction de capture de l'unité de capture d'image (11) en fonction de la partie.

6. Système de travail automatisé selon l'une quelconque des revendications 2 à 5, **caractérisé en ce que**
l'appareil de commande (SV, TM) comporte en outre :
une unité de traitement d'image (ST5, TM4) configurée pour réaliser un traitement d'image prédéterminé sur l'image, et
l'unité de traitement d'image (ST5, TM4)
acquiert, à partir de l'image comportant un produit agricole capturée lors d'un processus de culture dans la zone de travail, au moins un quelconque élément d'informations de caractéristique à partir d'informations de couleur indiquant une hauteur, une quantité de croissance dense, et un niveau de croissance du produit agricole, et estime un moment de récolte du produit agricole, sur la base des informations de caractéristique.

7. Système de travail automatisé selon la revendication 6, **caractérisé en ce que**
l'appareil de commande (SV, TM) comporte en outre :
une unité de stockage (SD6, TM5) configurée pour stocker une table dans laquelle les informations de couleur acquises à partir de l'image sont en association avec le niveau de croissance du produit agricole, et
l'unité de traitement d'image (ST5, TM4) estime le moment de récolte du produit agricole en référence à la table.

8. Système de travail automatisé selon la revendication 6 ou 7, **caractérisé en ce que**
l'appareil de commande (SV, TM) comporte en outre :
une unité de notification (SD7, TM6) configurée pour notifier à l'utilisateur le moment de récolte, et
**en ce que** l'unité de génération (C1) génère le planning de telle sorte qu'un temps planifié auquel l'utilisateur visite la zone de travail ne chevauche pas le moment de récolte.

9. Système de travail automatisé selon l'une quelconque des revendications 1 à 8,
**caractérisé en ce que**, en réponse à l'établissement d'informations d'attribut indiquant un attribut de travail de l'utilisateur dans la zone de travail, l'unité de génération (C1) acquiert le temps de travail planifié correspondant aux informations d'attribut et génère le planning.
